# EUROPÄISCHE PATENTANMELDUNG

(11) **EP 3 422 263 A1**
(43) Veröffentlichungstag der Anmeldung: **02.01.2019**
(21) Anmeldenummer: 17178734.4
(22) Anmeldetag: 29.06.2017
(51) Int. Cl.: G06Q 10/02

(54) **VERFAHREN ZUR ERFASSUNG EINER GEBÜHRENPFLICHTIGEN LEISTUNG ZUR VERRECHNUNG AN EINEN TEILNEHMER**

(71) Anmelder: Siemens Schweiz AG, 8047 Zürich (CH)
(72) Erfinder: FISCHER, Michael, 8932 Mettmenstetten (CH)
(74) Vertreter: Maier, Daniel Oliver

(57) **Zusammenfassung**

Erfindungsgemäss ist ein Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird, vorgesehen, umfassend die folgenden Verfahrensschritte:
a) Registrieren des Teilnehmers mit einem ihn identifizierenden biometrischen Merkmals, vorzugsweise Fingerprint oder Iris, in einem die Verrechnung der Leistung koordinierenden Verwaltungssystem;
b) Bereitstellen von biometrischen Sensoren an dem Anfangsort und dem Zielort, wobei die biometrischen Sensoren mit einer Kontrolleinheit verbunden sind, die zumindest zeitweise eine Verbindung zu dem Verwaltungssystem aufweist;
c) Erfassen des biometrischen Merkmals des Teilnehmers am Anfangsort bzw. innerhalb einer diesem Anfangsort zugeordneten Umgebung und Quittieren der korrekten Erfassung zumindest von so vielen Teilen des biometrischen Merkmals, dass eine spätere Identifikation des Teilnehmers möglich ist;
d) Erfassen des biometrischen Merkmals des Teilnehmers am Zielort bzw. innerhalb einer diesem Zielort zugeordneten Umgebung und Quittieren der korrekten Erfassung zumindest von so vielen Teilen des biometrischen Merkmals, dass eine spätere Identifikation des Teilnehmers möglich ist; und
e) Ermitteln des zur dem am Anfangsort und am Zielort erfassten biometrischen Merkmal gehörenden Teilnehmers zur Bestimmung des Umfangs der in Anspruch genommenen gebührenpflichtigen Leistung;
f) Ermitteln des zu der in Anspruch genommenen gebührenpflichtigen Leistung zugehörige Verrechnungsbetrags; und
g) Verrechnung des ermittelten Verrechnungsbetrags an den Teilnehmer.

## Beschreibung

Die vorliegende Erfindung bezieht sich auf ein Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird.

Bei der Erfassung von gebührenpflichtigen Leistungen geht es in der Regel um die Erfassung von Transportleistungen im öffentlichen Nahverkehr oder in Freizeiteinrichtungen, wie z.B. Skigebiete, Fun-Parks. Gebührenpflichtige Leistungen können aber auch der Besuch von Kunstausstellungen, der Aufenthalt auf einem Event-Gelände oder einer Bibliothek oder ähnlichem sein.

Zunehmend versuchen die Betreiber dieser Einrichtungem im Wege von e-ticketing-Anwendungen den Komfort für den Teilnehmer zu erhöhen und selbst einerseits Kosten für die Vergebührung der in Anspruch genommenen Leistungen reduzieren und andererseits Informationen über die Belegung ihrer Anlagen/Fahrzeuge zur Verbesserung der logistischen Prozesse in ihren eigenen Betriebsabläufen gewinnen zu können.

Zur Bereitstellung von E-Ticketing-Anwendungen sind zahlreiche Lösungen bekannt und im Einsatz. Grundsätzlich wird bei diesen Anwendungen zwischen Be-In-Be-Out-Systemen (BIBO) und Check-In-Check-Out-Systemen (CICO) unterschieden. Während der Benutzer bei BIBO-Systemen automatisch in einem Verkehrsmittel durch das Vorhandensein eines elektronischen Transponders erfasst wird, ist bei CICO-Systemen die Mitwirkung des Benutzers erforderlich. Im öffentlichen Nahverkehr muss der Benutzer beispielsweise seinen Ein- und Aussteigeort und -zeitpunkt durch eine aktive Betätigung beispielsweise einer Applikation auf einem Smart Phone oder durch die Identifikation einer Chipkarte an einem Zugangs- und Ausgangsgate festlegen. Im ersten Fall setzt dies voraus, dass das Smart Phone über eine hinreichende Ladungsreserve verfügt, damit der Benutzer seinen besonders für die Festlegung des Fahrpreises relevanten Ausstieg aus dem Verkehrsmittel quittieren kann. Im zweiten Fall setzt dies voraus, dass der Benutzer die Chipkarte mitführt um sie an dem Zugangs- und dem Ausgangsgate erfassen zu können. Beide vorgenannten Voraussetzungen können aber nicht gegeben sein, weil das Smart Phone des Benutzers einen zu geringen Ladungszustand aufweist oder er die Chipkarte vergessen hat. In beiden Fällen existiert heute noch als Rückfallebene das Papierticket, das an einem Automaten gelöst werden kann.

Der vorliegenden Erfindung liegt daher die Aufgabe zugrunde, ein Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird, anzugeben, dass ohne die Erfassung von Transpondern und/oder Chip-Karten auskommt und zugleich robust und zuverlässig personenbezogen ist.

Diese Aufgabe wird erfindungsgemäss durch ein Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird, gelöst, umfassend die folgenden Verfahrensschritte:
a) Registrieren des Teilnehmers mit einem ihn identifizierenden biometrischen Merkmal, vorzugsweise Fingerprint oder Iris, in einem die Verrechnung der Leistung koordinierenden Verwaltungssystem;
b) Bereitstellen von biometrischen Sensoren an dem Anfangsort und dem Zielort, wobei die biometrischen Sensoren mit einer Kontrolleinheit verbunden sind, die zumindest zeitweise eine Verbindung zu dem Verwaltungssystem aufweist;
c) Erfassen des biometrischen Merkmals des Teilnehmers am Anfangsort bzw. innerhalb einer diesem Anfangsort zugeordneten Umgebung und Quittieren der korrekten Erfassung zumindest von so vielen Teilen des biometrischen Merkmals, dass eine spätere Identifikation des Teilnehmers möglich ist;
d) Erfassen des biometrischen Merkmals des Teilnehmers am Zielort bzw. innerhalb einer diesem Zielort zugeordneten Umgebung und Quittieren der korrekten Erfassung zumindest von so vielen Teilen des biometrischen Merkmals, dass eine spätere Identifikation des Teilnehmers möglich ist; und
e) Ermitteln des zur dem am Anfangsort und am Zielort erfassten biometrischen Merkmal gehörenden Teilnehmers zur Bestimmung des Umfangs der in Anspruch genommenen gebührenpflichtigen Leistung;
f) Ermitteln des zu der in Anspruch genommenen gebührenpflichtigen Leistung zugehörige Verrechnungsbetrags; und g) Verrechnung des ermittelten Verrechnungsbetrags an den Teilnehmer.

Auf diese Weise ist es möglich, dass ein Teilnehmer/Bezieher einer gebührenpflichtigen Leistungen sich allein mit seinen biometrischen Merkmalen zum Bezug der Leistunge an- und wieder abmelden kann. Dabei erhält der Teilnehmer durch die Quittierung den wichtigen Hinweis, dass er korrekt am Anfangsort und am Zielort erfasst worden ist. Unter Hinzufügung der Anfangszeit (=Zeitpunkt der Erfassung am Anfangsort) und der Zielzeit (=Zeitpunkt der Erfassung am Zielort) ist es dem Bereitsteller der gebührenpflichtigen Leistung sogar möglich, den zu verrechnenden Betrag für die erbrachte Leistung in Abhängigkeit von der Anfangszeit und/oder der Zielzeit zu staffeln, wie dies beispielsweise bereits im öffentlichen Nahverkehr diskutiert wird. Hiermit lassen sich beispielsweise die Transportleistungen zu Randzeiten ausserhalb der Hauptverkehrszeiten am Morgen und am Abend von Werktagen zu günstigeren Tarifen anbieten. Somit liesse sich der Passagierstrom vergleichmässigen und der Komfort für die Fahrgäste zur Hauptverkehrszeit anheben.

In einer vorteilhaften Ausgestaltung der Erfindung kann das Bereitstellen der biometrischen Sensoren am Anfangs- und am Zielort erfolgen, indem am Anfangsort und am Zielort ortsfeste biometrische Sensoren , vorzugsweise Fingerprint-Sensoren, vorgesehen sind. Für den ÖV würde dies die entsprechende Ausrüstung der Haltestellen mit biometrischen Sensoren bedeuten, was im Besonderen beim Zustieg der Fahrgäste den Vorteil hat, dass das Eintreffen der Fahrgäste anders als der Zustieg zum Transportmittel in gestaffelter Weise erfolgt und damit den Einstieg nicht verzögert.

Ergänzend oder alternativ hierzu kann es aber vorgesehen sein, dass das Bereitstellen der biometrischen Sensoren am Anfangs- und am Zielort erfolgt, indem ein mit mindestens einem biometrischen Sensor ausgestattetes Fahrzeug zur Erbringung der gebührenpflichtigen Leistung den Anfangsort und den Zielort zwecks Zu- oder Ausstieg des Teilnehmers anfährt.

Damit die Teilnehmer möglichst schnell erfasst werden können, ist es vorgesehen, dass die effektive Zuordnung des erfassten biometrischen Merkmals zu einem Teilnehmer in einem Nachbearbeitungsvorgang vorgenommen wird, der vorzugsweise von dem Verwaltungssystem gesteuert wird. Ein derartiger Nachbearbeitungsvorgang kann beispielsweise immer dann ausgeführt werden, wenn zum Beispiel ein Bus an seiner Endhaltestelle wendet und hier grössere Datenübertragungsraten zwischen dem Bus und dem Verwaltungssystem zur Verfügung stehen.

Aufgrund von empirischen Tests weiss man, dass bereits die Erfassung eines Teils des biometrischen Merkmal ausreichend ist, um einen Teilnehmer eindeutig identifizieren zu können. Deshalb kann es hinsichtlich der Erfassungsrate von Teilnehmern und der Bearbeitung im Nachbearbeitungsprozess hilfreich sein, wenn zum Quittieren der korrekten Erfassung zumindest von so vielen Teilen des biometrischen Merkmals, dass eine spätere Identifikation des Teilnehmers möglich ist, ein Umfang des zu erfassenden Teils für ein biometrisches Merkmal vorgestimmt ist, das zur Identifikation des Teilnehmers mindestens erforderlich ist. Somit können die biometrischen Sensoren bei Erfassung eines Mindestumfangs des biometrischen Merkmals umgehend eine hinreichende Erfassung quittieren und für die nächste Erfassung wieder zur Verfügung stehen.

Sicher hilfreich ist es ebenfalls, wenn bei ausbleibender Quittierung dem Teilnehmer signalisiert wird, dass eine erneute Erfassung seines biometrischen Merkmals am biometrischen Sensor vorzunehmen ist. Somit ist sichergestellt, dass der Teilnehmer eindeutig über die korrekte Erfassung seines biometrischen Merkmals informiert ist.

Um die erforderliche Rechenzeit zur Ermittlung der zu dem erfassten biometrischen Merkmal gehörenden Person möglichst kurz halten zu können, kann es besonders vorteilhaft sein, wenn ein erster Suchpool von biometrischen Merkmalen zur Ermittlung des Teilnehmers eines am Zielort aufgezeichneten biometrischen Merkmals auf die Teilnehmer begrenzt wird, deren biometrische Merkmale schon am Anfangsort erfasst und erkannt worden sind. Auf den ÖV bezogen bedeutet dies, dass beim Nachbearbeitungsvorgang zunächst auf die biometrischen Merkmalssätze der Personen beschränkt wird, deren biometrische Merkmale bereits zuvor schon einmal einer Person zuordnet werden konnten, beispielsweise durch die Erfassung des biometrischen Merkmals am Anfangsort. Mit andere Worten heisst dies, dass jede einmal erfasste und identifizierte Person somit dem ersten Suchpool für eine vorbestimmbare Zeit zugeordnet wird.

Weiter lässt sich diese Rechenzeit günstig beeinflussen, wenn ein zweiter Suchpool von biometrischen Merkmalen aufgrund von Erfahrungsdaten der Benutzung durch einen Teilnehmer gebildet wird. So kann während des Nachbearbeitungsvorgangs gelernt werden, dass beispielsweise ein ÖV-Fahrgast regelmässig am Morgen auf eine bestimmte S-Bahnlinie in der Peripherie (beispielsweise an seinem Wohnort) zusteigt und später nach dem Umsteigen am Ziel-S-Bahnhof aus einer bestimmten Tram- oder Buslinie wieder aussteigt. Damit kann diese Person für die Auswertung der erfassten biometrischen Merkmale am Anfangsort für diese bestimmte S-Bahnlinie speziell dem zweiten Suchpool zugewiesen werden. Andere erkannte wiederkehrende Muster bei der Inanspruchnahme der gebührenpflichtigen Leistung können so in erster Näherung helfen, die Anzahl der zu durchsuchenden biometrischen Merkmale stark einschränken zu können.

Weitere vorteilhafte Ausgestaltungen der vorliegenden Erfindung sind den übrigen Unteransprüchen zu entnehmen.

Vorteilhafte Ausführungsbeispiele der vorliegenden Erfindung werden nachfolgend näher erläutert. Das erfindungsgemässe Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird, wird hier anhand des Bespiels des öffentlichen Nahverkehrs erläutert. umfassend die folgenden Verfahrensschritte:
a) Zunächst muss sicher der Fahrgast einmalig an einem Verwaltungssystem, nachfolgend Ticketsystem genannt, des Betreibers des öffentlichen Nahverkehrs registrieren. Bei der Registrierung gibt er sein ihn identifizierendes biometrischen Merkmal sowie seinen Namen, Anschrift und Rechnungsadresse an. Das biometrische Merkmal ist in diesem Fall der Fingerabdruck seines rechten Daumens.
b) Weiter muss der Betreiber seine Haltestellen und/oder die Türbereiche seiner Fahrzeuge mit biometrischen Fingerprintsensoren ausrüsten um später im Betrieb die Erfassung von Anfangsort und Zielort zu ermöglichen. Dabei sind die biometrischen Fingerprintsensoren mit einer Kontrolleinheit, z.B. Fahrzeugcomputer, verbunden, die zumindest zeitweise eine Verbindung zu dem Ticketsystem aufweist.
c) Beim Einsteigen des Fahrgast erfasst dieser seinen Finderabdruck an dem Anfangsort, wie z.B. an der Haltestelle oder innerhalb einer diesem Anfangsort zugeordneten Umgebung an dem Fingerprintsensor im Fahrzeug. Damit kann die Erfassung auch noch nach der Abfahrt des Fahrzeugs ausgeführt werden. Der Fingerprintsensor quittiert die korrekte Erfassung zumindest von so vielen Teilen des biometrischen Fingerabdrucks, dass eine spätere Identifikation des Fahrgastes möglich ist. So kann es zum Beispiel ausreichen, wenn auf 50% der Fläche eines Fingerabdrucks mittlere Grösse konturenscharfe Linie registriert worden sind. Zusätzlich zu dem Fingerprint kann auch noch der Erfassungszeitpunkt zu dem Datensatz des Fingerprints hinzugefügt werden.
d) Diese Prozedur wiederholt sich beim Aussteigen des Fahrgastes an seinem Zielort.
e) Die Kontrolleinheit der Haltestelle bzw. das Fahrzeuggerät des Fahrzeugs speichert nun die erfassten Fingerprintdatensätze und überträgt diese an das Ticketsystem zur Nachbearbeitung. Vorbereitend kann die Kontrolleinheit bzw. das Fahrzeuggerät auch schon prüfen, ob die Fingerprint schon einmal an dieser Haltestelle bzw. diesem Fahrzeuggerät erfasst worden ist. Das Ticketsystem oder ein mit verbundenes Rechnersystem ermittelt dann den zur dem am Anfangsort und am Zielort erfassten biometrischen Fingerprintmuster gehörenden Teilnehmers zur Bestimmung des Umfangs der gefahrenen Fahrstrecke. Anschliessend wird mit der ermittelten Fahrstrecke der zugehörige Fahrpreis bestimmt.
f) Abschliessend erfolgt dann die Verrechnung des ermittelten Fahrpreises an den Fahrgast, beispielsweise über Erstellung einer monatlichen Rechnung mit der Aufstellung aller gefahrenen Fahrstrecken oder über die Benachrichtigung auf einem Smart Phone unter Angabe der gefahrenen Fahrstrecke und Belastung des Mobilfunkkontos.

Als biometrisches Merkmal würde neben dem oben erwähnten Fingerprint auch das Muster der Iris geeignet sein. Aus Praktikabilitätsgründen beispielsweise beim Zu- und Aussteigen aus ÖV-Fahrzeugen ist jedoch der Fingerprint entsprechend einfacher und schneller aufzuzeichnen.

Das vorstehend für den ÖV erläuterte Verfahren ist auch in anderen Anwendungen einsetzbar. Beispielhaft können hier Skigebiete oder andere preislich von der effiktiven Nutzung abhängige Freizeitanlagen, Museen, Bibliotheken, Restaurants, genannt werden.

Aufgrund von empirischen Tests weiss man, dass bereits die Erfassung eines Teils des biometrischen Merkmal ausreichend ist, um einen Teilnehmer eindeutig identifizieren zu können. Deshalb kann es hinsichtlich der Erfassungsrate der Fahrgäste und der Bearbeitung im Nachbearbeitungsprozess hilfreich sein, wenn zum Quittieren der korrekten Erfassung zumindest von so vielen Teilen des biometrischen Merkmals, dass eine spätere Identifikation des Teilnehmers möglich ist, ein Umfang des zu erfassenden Teils für ein biometrisches Merkmal als Grenzwert vorgestimmt ist, das zur Identifikation des Teilnehmers mindestens erreicht sein muss. Somit können die biometrischen Sensoren bei Erfassung eines Mindestumfangs des biometrischen Merkmals umgehend eine hinreichende Erfassung quittieren und für die nächste Erfassung wieder zur Verfügung stehen.

Ebenso macht es im ÖV Sinn, dass bei ausbleibender Quittierung dem Fahrgast signalisiert wird, dass eine erneute Erfassung seines Fingerprints am biometrischen Fingerprint-Sensor vorzunehmen ist. Somit ist sichergestellt, dass der Fahrgast eindeutig über die korrekte Erfassung seines biometrischen Merkmals informiert ist und somit als Reisender gültig erfasst ist.

Um die erforderliche Rechenzeit zur Ermittlung der zu dem erfassten biometrischen Merkmal gehörenden Person möglichst kurz halten zu können, kann es besonders vorteilhaft sein, wenn ein erster Suchpool von biometrischen Merkmalen zur Ermittlung des Fahrgasts eines am Zielort aufgezeichneten biometrischen Merkmals auf die Fahrgäste begrenzt wird, deren biometrische Merkmale schon am Anfangsort erfasst und erkannt worden sind. Auf den ÖV bezogen bedeutet dies, dass beim Nachbearbeitungsvorgang die Suche zunächst auf die biometrischen Merkmalssätze der Personen beschränkt wird, deren biometrische Merkmale bereits zuvor schon einmal einer Person zuordnet werden konnten, beispielsweise durch die Erfassung des biometrischen Merkmals am Anfangsort. Mit andere Worten heisst dies, dass jede einmal erfasste und identifizierte Person somit dem ersten Suchpool für eine vorbestimmbare Zeit zugeordnet wird. Diese Zeit kann beispielsweise bis zum Fahrplanende des jeweils laufenden Tages betragen.

Weiter lässt sich diese Rechenzeit günstig beeinflussen, wenn ein zweiter Suchpool von biometrischen Merkmalen aufgrund von Erfahrungsdaten der Benutzung durch einen Teilnehmer gebildet wird. So kann während des Nachbearbeitungsvorgangs gelernt werden, dass beispielsweise ein ÖV-Fahrgast regelmässig am Morgen auf eine bestimmte S-Bahnlinie in der Peripherie (beispielsweise an seinem Wohnort) zusteigt und später nach dem Umsteigen am Ziel-S-Bahnhof aus einer bestimmten Tram- oder Buslinie wieder aussteigt. Damit kann diese Person für die Auswertung der erfassten biometrischen Merkmale am Anfangsort für diese bestimmte S-Bahnlinie speziell dem zweiten Suchpool zugewiesen werden. Andere erkannte wiederkehrende Muster bei der Inanspruchnahme der gebührenpflichtigen Leistung können so in erster Näherung helfen, die Anzahl der zu durchsuchenden biometrischen Merkmale stark einschränken zu können.

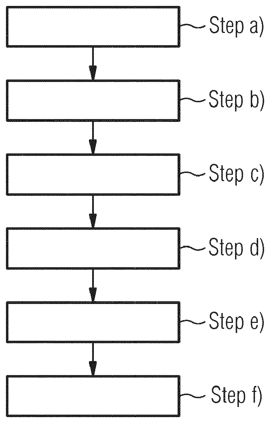

## Patentansprüche

1. Verfahren zur Erfassung einer gebührenpflichtigen Leistung zur Verrechnung an einen Teilnehmer, deren Umfang durch einen Anfangsort und optional eine Anfangszeit und einen Zielort und optional eine Zielzeit bestimmt wird, umfassend die folgenden Verfahrensschritte:
a) Registrieren des Teilnehmers mit einem ihn identifizierenden biometrischen Merkmals, vorzugsweise Fingerprint oder Iris, in einem die Verrechnung der Leistung koordinierenden Verwaltungssystem;
b) Bereitstellen von biometrischen Sensoren an dem Anfangsort und dem Zielort, wobei die biometrischen Sensoren mit einer Kontrolleinheit verbunden sind, die zumindest zeitweise eine Verbindung zu dem Verwaltungssystem aufweist;
c) Erfassen des biometrischen Merkmals des Teilnehmers am Anfangsort bzw. innerhalb einer diesem Anfangsort zugeordneten Umgebung und Quittieren der korrekten Erfassung zumindest von so vielen Teilen des biometrischen Merkmals, dass eine spätere Identifikation des Teilnehmers möglich ist;
d) Erfassen des biometrischen Merkmals des Teilnehmers am Zielort bzw. innerhalb einer diesem Zielort zugeordneten Umgebung und Quittieren der korrekten Erfassung zumindest von so vielen Teilen des biometrischen Merkmals, dass eine spätere Identifikation des Teilnehmers möglich ist; und
e) Ermitteln des zur dem am Anfangsort und am Zielort erfassten biometrischen Merkmal gehörenden Teilnehmers zur Bestimmung des Umfangs der in Anspruch genommenen gebührenpflichtigen Leistung;
f) Ermitteln des zu der in Anspruch genommenen gebührenpflichtigen Leistung zugehörige Verrechnungsbetrags; und
g) Verrechnung des ermittelten Verrechnungsbetrags an den Teilnehmer.

2. Verfahren nach Anspruch 1,
dadurch gekennezeichnet, dass
das Bereitstellen der biometrischen Sensoren am Anfangs- und am Zielort erfolgt, indem am Anfangsort und am Zielort ortsfeste biometrische Sensoren , vorzugsweise Fingerprint-Sensoren, vorgesehen sind.

3. Verfahren nach Anspruch 1 oder 2,
dadurch gekennezeichnet, dass
das Bereitstellen der biometrischen Sensoren am Anfangs- und am Zielort erfolgt, indem ein mit mindestens einem biometrischen Sensor ausgestattetes Fahrzeug zur Erbringung der gebührenpflichtigen Leistung den Anfangsort und den Zielort zwecks Zu- oder Ausstieg des Teilnehmers anfährt.

4. Verfahren nach einem der vorangehenden Ansprüche,
**dadurch gekennzeichnet, dass**
die effektive Zuordnung des erfassten biometrischen Merkmals zu einem Teilnehmer in einem Nachbearbeitungsvorgang vorgenommen wird, der vorzugsweise von dem Verwaltungssystem gesteuert wird.

5. Verfahren nach einem der vorangegangenen Ansprüche,
**dadurch gekennzeichnet, dass**
zum Quittieren der korrekten Erfassung zumindest von so vielen Teilen des biometrischen Merkmals, dass eine spätere Identifikation des Teilnehmers möglich ist, ein Umfang des zu erfassenden Teils für ein biometrisches Merkmal vorgestimmt ist, das zur Identifikation des Teilnehmers mindestens erforderlich ist.

6. Verfahren nach Anspruch 5,
**dadurch gekennzeichnet, dass**
bei ausbleibender Quittierung dem Teilnehmer signalisiert wird, dass eine erneute Erfassung seines biometrischen Merkmals am biometrischen Sensor vorzunehmen ist.

7. Verfahren nach einem der vorangehenden Ansprüche,
**dadurch gekennzeichnet, dass**
ein erster Suchpool von biometrischen Merkmalen zur Ermittlung des Teilnehmers eines am Zielort aufgezeichneten biometrischen Merkmals auf die Teilnehmer begrenzt wird, deren biometrische Merkmale schon am Anfangsort erfasst und erkannt worden sind.

8. Verfahren nach einem der vorangehenden Ansprüche,
**dadurch gekennzeichnet, dass**
ein zweiter Suchpool von biometrischen Merkmalen aufgrund von Erfahrungsdaten der Benutzung durch einen Teilnehmer gebildet wird.
